# EUROPEAN PATENT SPECIFICATION

(11) **EP 3 678 927 B1**
(45) Date of publication and mention of the grant of the patent: **21.04.2021**
(21) Application number: 18769082.1
(22) Date of filing: 31.08.2018
(51) Int. Cl.: B62K 5/003, B62K 7/00, B62K 17/00

(54) **IMPROVED VEHICLE FOR PASSENGER TRANSPORTATION**
VERBESSERTES FAHRZEUG FÜR DEN PERSONENTRANSPORT
VÉHICULE AMÉLIORÉ POUR LE TRANSPORT DE PASSAGERS

(30) Priority: 07.09.2017 IT 201700100493
(43) Date of publication of application: 15.07.2020
(73) Proprietor: Cyclebus S.r.l., 62020 Colmurano (MC) (IT)
(72) Inventor: Merelli, Patrizio, 62020 Colmurano (MC) (IT)
(74) Representative: Baldi, Claudio
(86) International application number: PCT/EP2018/073423
(87) International publication number: WO 2019/048343

(56) References cited:
- WO-A1-99/12794
- CN-A- 104 228 569
- FR-A- 952 354
- GB-A- 2 263 889

## Description

The present patent application for industrial invention relates to an improved vehicle for passenger transportation.

Pedal vehicles are known, called "cycle buses", which comprise a main chassis with a longitudinal axle parallel to the direction of motion. Seats for passengers are fixed to the main chassis. The seat in the front is the driver seat, which is used by the driver. The remaining seats are used by the passengers.

A steering device is disposed in front of the driver seat. The cycle bus usually comprises two front steering wheels that are connected to the steering device, and two rear idle wheels.

The cycle bus comprises pedals associated with each seat, in such a way that the driver and every passenger can contribute to the motion of the cycle bus.

Transmission means transmit the motion from the pedals to the wheels.

This type of cycle buses is impaired by the fact that they are difficult to maneuver. In fact, the distance between the front steering wheels and the rear idle wheels is very long. Consequently, maneuvering spaces are considerable, making the circulation of the cycle bus difficult in crowded areas.

Moreover, when the steering angle is not sufficient to make a sharp bend, it is impossible for the cycle bus to move in reverse motion. In such a case, a complicated maneuver is necessary, which consists in repeatedly making short back and forth movements of the vehicle, inverting the steering at every movement.

When a small reverse movement is to be made, some of the passengers have to get off the bus in order to reduce the total weight of the cycle bus, and move the vehicle in reverse motion.

WO99/12794 discloses a vehicle comprising steering means for revolving wheels, wherein the steering means are suitable for driving the revolving wheels around a vertical axis in such a way that the vehicle rotates around a rotation point. The vehicle disclosed in WO99/12794 comprises transmission means associated with the steering means and with the wheels, in such a way to rotate all wheels simultaneously according to the rotation of the steering column. However, the vehicle disclosed in WO99/12794 is not provided with non polluting propulsion means that are based on the physical force of one or more passengers. Moreover, in the vehicle disclosed in WO99/12794, the passengers cannot contribute to the propulsion of the vehicle.

The purpose of the present invention is to overcome the drawbacks of the prior art by disclosing a vehicle that is easy to maneuver, is environmental friendly and can be moved by one or more passengers by means of physical force.

These purposes are achieved according to the invention with the characteristics of the appended independent claim 1.

Advantageous embodiments appear from the dependent claims. The vehicle of the invention is defined by claim 1.

The advantages of the vehicle according to the invention are manifest, wherein because of the provision of pedals and of a passenger seat that rotates integrally with the support assembly and with the wheels, the vehicle can be moved and maneuvered easily by means of the passenger's physical force.

For the sake of clarity, the description of the vehicle according to the invention continues with reference to the attached drawings, which have a merely illustrative, not limiting value, wherein:
- Fig. 1 is a diagrammatic top view of the interior of the vehicle according to the invention with the wheels in steering position to make a curve to the left;
- Fig. 2 is a diagrammatic side view of the vehicle according to the invention with the wheels in linear traveling position;
Figs. 3 and 4 are respectively a side and a front view of the vehicle of the invention;

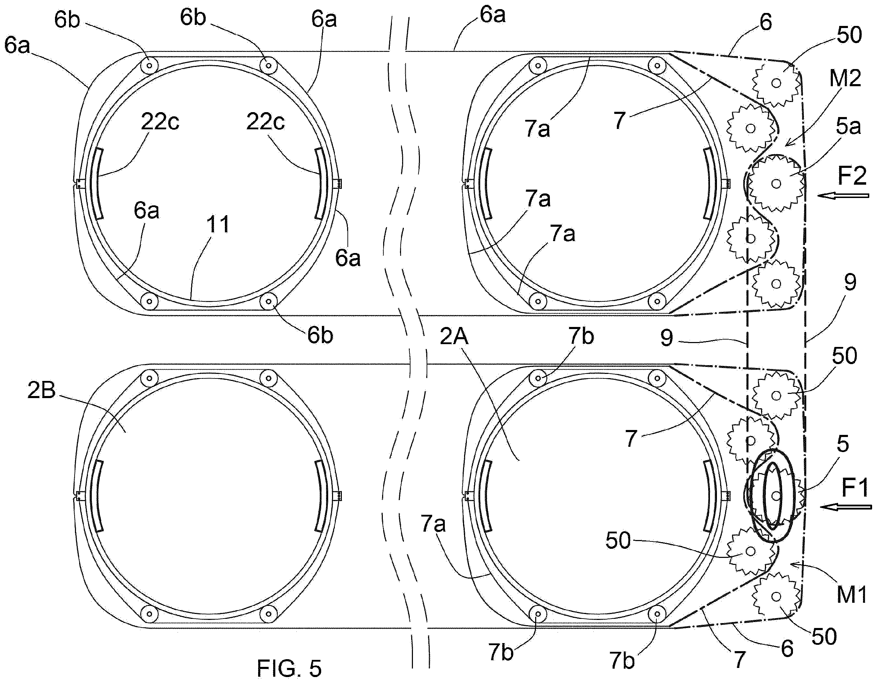

- Fig. 5 is a diagrammatic top view of transmission means of the vehicle according to the invention, which connect the steering device to each support assembly.

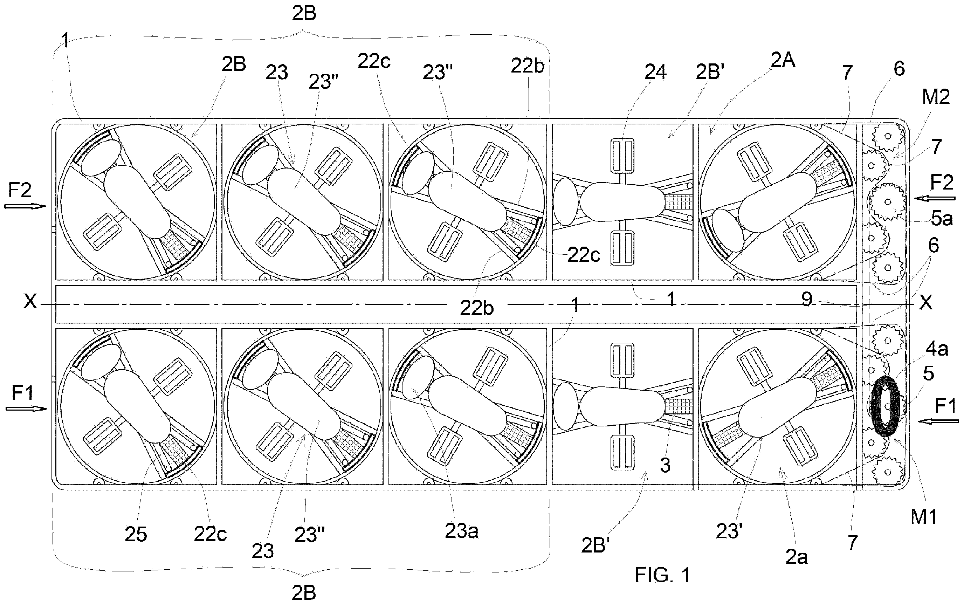

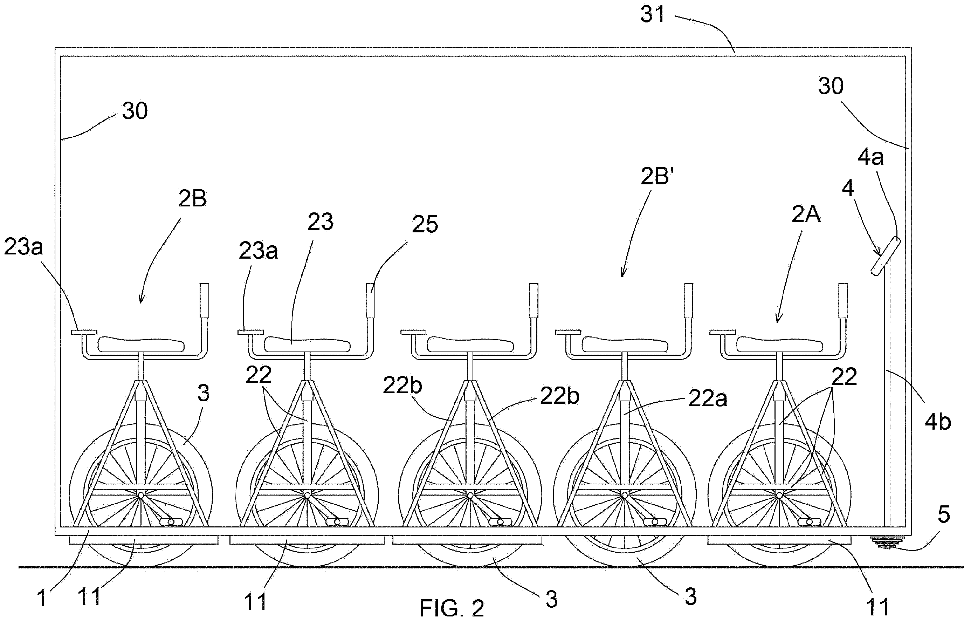

With reference to Figs. 1 and 2, a vehicle for passenger transportation according to the invention is disclosed, comprising a main chassis (1) with a longitudinal axle (X) parallel to the direction of motion.

The vehicle is provided with a plurality of seats (23) that comprise a front driver-seat (23') for the driver and passenger-seats (23") for the passengers. The seats (23) are disposed in two parallel longitudinal rows.

The vehicle comprises two longitudinal rows of wheels (3), where each row comprises more than two wheels (3).

The vehicle comprises two longitudinal rows (F1, F2) of support assemblies (2) of the wheels (3) and of the seats (23). Each support assembly (2) supports a wheel (3) in lower position and a seat (23) in upper position. The support assemblies (2) are revolvingly mounted around a vertical axis relative to the main chassis (1), in such a way that both the wheels (3) and the seats (23) revolve integrally with the support assembly around a vertical axis relative to the main chassis (1).

It must be noted that the driver-seat (23') is associated with a driver-support assembly (2a). Each row (F1, F2) of support assemblies (2) is formed of a first support assembly (2A) and a plurality of support assemblies (2B) disposed behind the first support assembly (2A). The driver-support assembly (2a) is a first support assembly (2A).

Optionally, the vehicle can also comprise fixed support assemblies (2B') relative to the main chassis (1).

The vehicle comprises a steering device (4) disposed in front of the driver-seat (23'). The steering device (4) comprises a flywheel (4a) and a steering column (4b).

The vehicle comprises propulsion means to move the vehicle. The propulsion means comprise a plurality of pairs of pedals (24). Each pair of pedals is associated with one or more support assemblies (2), in such a way that one or more passengers and/or driver can contribute to the motion of the vehicle.

With the exception of the driver-support assembly (2a), each support assembly (2) comprises a fixed non-steering handlebar (25) that is integral with the support assembly (2), so that the seat (23) and the fixed handlebar (25) rotate integrally with the support assembly (2). In view of the above, the individual passengers that are sitting on the seats (23) can pedal safely, comfortably holding the handlebar (25) and pedaling in the correct position also when making a curve.

A backpack holder (23a) supported by the support means (22) is provided on the back of each seat (23).

The vehicle comprises two transmission means (M1, M2), each of them being associated with one of the two rows (F1, F2) of support assemblies to connect the steering device (4) to each support assembly (2).

The transmission means (M1, M2) are configured in such a way to determine the simultaneous rotation of the support assemblies (2) and of the wheels (3) by a different angle following to the actuation of the steering device (4).

Each transmission means (M1, M2) comprises a support shaft that is actuated by the steering device (4) and connected to the support assembly (2) of the same row.

The transmission means (M1, M2) of each row (F1, F2) comprise a first set of pinions (5) for actuating the support assemblies (2) of the first row (F1), and a second set of pinions (5a) for actuating the support assemblies (2) of the second row (F2). The pinions of each set (5, 5a) have a different number of teeth and are all coaxially mounted on the same support shaft. More precisely, the number of teeth of each pinion increases when going towards the back of the vehicle.

Each transmission means (M1, M2) comprises:
- a plurality of primary chains (6), each chain being connected to one of the support assemblies (2B) disposed behind the first support assembly (2A) and engaging with one of the pinions (5, 5a) of the first set or the second set, and
- a secondary chain (7) that engages with one of the pinions (5, 5a) and is connected to the first support assembly (2A) of each row.

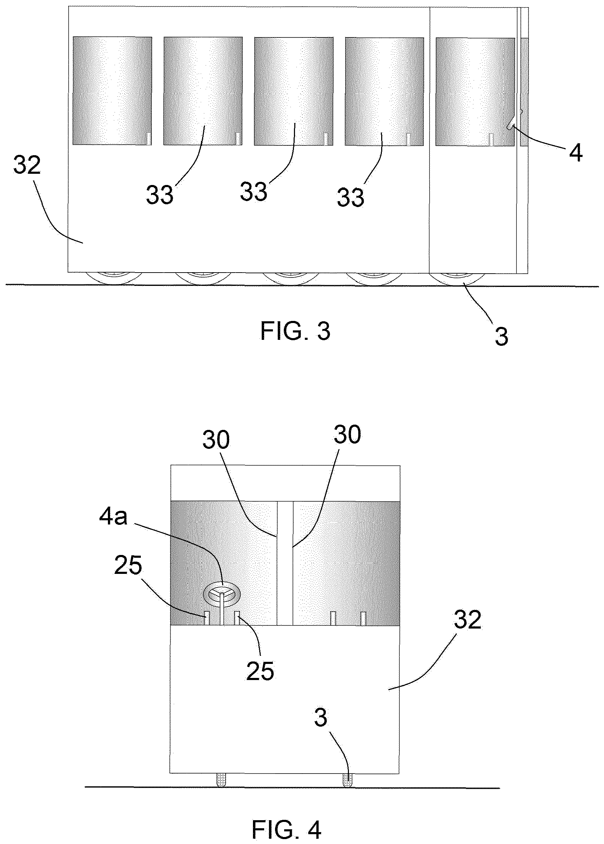

With reference to Figs. 1, 2 and 4, the main chassis (1) comprises a horizontal thrust block (11) for each support assembly (2); more precisely, each support assembly (2) comprises support means (22) that slidingly support it with respect to said thrust block (11) fixed on the main chassis (1).

The support means (22) of each support assembly comprise a fork (22a) for supporting the wheel (3) and at least one diverged pair of legs (22b) ending at the base with slides (22c) that are slidingly fixed to said horizontal thrust block (11).

The slides (22c) are connected, either directly or by means of extension cables, to the opposite ends of each primary chain (6) in such a way that, when the steering device (4) is actuated, all support assemblies (2B) disposed behind the first support assembly (2A) are simultaneously driven in an equiverse rotation by the primary chains (6), each of them by an angle with different width compared to the other support assemblies (2B) of the same row because of the fact that the primary chains (6) engage with pinions (5, 5a) that have a different number of teeth.

The rotation of each support assembly (2B) disposed behind the first support assembly (2A) corresponds to a similar rotation of the wheel (3), of the seat (23) and of the fixed handlebar (25) associated with said support assembly (2B).

The coupling between the pinions of each set of pinions (5, 5a) and the support assemblies (2B) disposed behind the first support assembly (2A) is preferably made in such a way that the angle of rotation of the support assemblies (2) disposed behind the first support assembly (2A) increases going towards the back of the vehicle, as shown in Fig. 1.

In view of the above, the primary chain (6) associated with the last support assembly (2B) of each row (F1, F2) engages with the last pinion (5, 5a) of the set, which has the highest number of teeth.

The secondary chain (7) engages with the pinion in opposite direction compared to the engagement of the primary chains (6), meaning that, with the same direction of rotation of all the pinions of the set of pinions (5, 5a), the first support assembly (2A) is driven in a rotation with opposite direction compared to the one of the support assemblies (2B) disposed behind the first support assembly (2A), as shown in Fig. 1.

Otherwise said, the slides (22c) of the support means of the first support assembly (2A) are connected to the opposite ends of the secondary chain (7) in such a way that, when the steering device (4) is actuated, the first support assembly (2A), connected to said secondary chain (7) is driven into a rotation with opposite direction compared to the one of the following support assemblies (2B).

Advantageously, the secondary chain (7) does not engage with a specific pinion (5, 5a), but with the same pinion (5, 5a) that is engaged with the primary chain (6) associated with the last support assembly (2B) of the row. Therefore, the pinion (5, 5a) associated with the last support assembly (2B) of the row and provided with the highest number of teeth is engaged for a first sector of circle with the primary chain (6) and for a second sector of circle, opposite to the first one, with the secondary chain (7), as shown in Fig. 1.

Moreover, the vehicle comprises return pinions (50) suitable for deviating the trajectory of the chains (6, 7).

The opposite ends of the chains (6, 7) are fixed to the slides (22c) by means of pulling cables (6a, 7a), the trajectory of which is conditioned by return pulleys (6b, 7b).

Advantageously, the first set of pinions (5) is directly mounted at the base of the steering column (4b) and the second set of pinions (5a) is moved by the first set of pinions (5) by means of a return chain (9) that engages with a pinion of the first set of pinions (5) and with a pinion of the second set of pinions (5a), in such a way as to transmit the motion from the first set of pinions (5) to the second set of pinions (5a).

Although it supports a seat (23), a handlebar (25) and a wheel (3), the fixed support assembly (2B') is not fixed to any primary chain (6) and is not revolvingly supported by a horizontal thrust block (11), and therefore the actuation of the steering device (4) does not cause the movement of the fixed support assembly (2B').

With reference to Figs. 2, 3 and 4, the main chassis (1) comprises a structure formed of lateral uprights (30) and upper crosspieces (31), which acts as support for multiple panels (32) used to close the structure on the sides and on top, protecting the passengers against rain, wind, sunshine, dust, and the like.

The panels (32) are preferably large pieces of waterproof material provided with transparent inserts (33), which are suitable to create a sort of windows through which the passengers and the driver can see outside.

The advantages of the vehicle according to the invention are manifest, wherein because of the provision of a plurality of pedals that are associated with each revolving seat integrally with the wheels, each passenger can contribute to the motion of the vehicle and, at the same time, because of the provision of the transmission means, the vehicle can be maneuvered easily.

Although not shown in the figures, the number of seats, rows, wheels, support assemblies and moving means can vary. Moreover, in order to move the vehicle by means of the physical force of one passenger, it is sufficient to associate only one support assembly (2) to a pair of pedals (24) and to a seat (23).

## Claims

1. Vehicle for passenger transportation, comprising:
- a main chassis (1) with a longitudinal axle (X);
- multiple seats (23), comprising one driver-seat (23');
- at least two longitudinal rows of wheels (3), where each row comprises more than two wheels (3);
- at least two longitudinal rows (F1, F2) of support assemblies (2) of the wheels (3); each support assembly (2) supporting a wheel (3); said support assemblies (2) being revolvingly mounted around a vertical axis relative to said main chassis (1);
- a steering device (4) disposed in front of said driver-seat (23');
- propulsion means to move the vehicle;
- at least two transmission means (M1, M2), each of them being associated with one of the two rows (F1, F2) of support assemblies to connect said steering device (4) to each support assembly (2); said transmission means (M1, M2) being configured in such a way to cause the simultaneous rotation of said support assemblies (2) and of the wheels (3) by a different angle following to the actuation of the steering device (4);
**characterized in that**
said propulsion means comprise at least one pair of pedals (24); at least one support assembly (2) is associated with said at least one pair of pedals (24) and to one of said seats (23), in such a way that said at least one pair of pedals (24) and said seat (23) integrally revolve around said at least one support assembly (2) around a vertical axis relative to the main chassis (1).

2. The vehicle of claim 1, wherein said support assemblies (2) comprise a driver-support assembly (2a) associated with said driver-seat (23').

3. The vehicle of claim 1 or 2, wherein said at least one support assembly (2) comprises a fixed non-steering handlebar (25) integral with the support assembly (2).

4. The vehicle of any one of the preceding claims, wherein transmission means (M1, M2) comprise:
- two support shafts, each of them being actuated by the steering device (4) and connected to the support assemblies (2) of the same row (F1, F2);
- a first set of pinions (5) for actuating the support assemblies (2) of the first row (F1), and a second set of pinions (5a) for actuating the support assemblies (2) of the second row (F2); said pinions (5, 5a) of each set being coaxially mounted on the same support shaft;
- a plurality of primary chains (6), each of them being connected to one of the support assemblies (2B) disposed behind a first support assembly (2A); each primary chain (6) engaging with one of the pinions (5, 5a) of the first set or of the second set in such a way that, when the steering device (4) is actuated, each primary chain (6) drives into rotation the support assembly (2B) by an angle with the same direction, but with different amplitude relative to the angle of the other support assemblies (2B) of the same row;
- two secondary chains (7), one for each row; each secondary chain (7) engaging with one of said pinions (5, 5a) and being connected to the first support assembly (2A) of each row; said secondary chain (7) engaging with the corresponding pinion (5, 5a), in such a way that the first support assembly (2A) of each row rotates in the opposite direction relative to the support assemblies (2B) of the same row, disposed behind the first support assembly (2A).

5. The vehicle of claim 4, wherein the coupling between the pinions of each set of pinions (5 and 5a) and the support assemblies (2B) of each row, disposed behind the first support assembly (2A), is made in such a way that the angle of rotation of the support assemblies (2) disposed behind the first support assembly (2A) increases going towards the back of the vehicle.

6. The vehicle of one of the preceding claims, wherein said steering device (4) comprises a flywheel (4a) with a steering column (4b).

7. The vehicle of claim 6 when depending on claim 4 or 5, wherein said set of pinions (5) of the first row is applied at the base of said steering column (4b); said transmission means (M1, M2) comprising a return chain (9) that engages with a pinion of the first set of pinions (5) and with a pinion of the second set of pinions (5a), in such a way as to transmit the motion from the first set of pinions (5) to the second set of pinions (5a).

8. The vehicle of one of the preceding claims, wherein said main chassis (1) comprises a horizontal thrust block (11) for each support assembly (2); each support assembly (2) comprising support means (22) that slidingly support it with respect to said thrust block (11) fixed on the main chassis (1).

9. The vehicle of claim 8, wherein said support means (22) comprise a fork (22a) for supporting the wheel (3) and at least one diverged pair of legs (22b) ending at the base with slides (22c) that are slidingly fixed to said horizontal thrust block (11).

10. The vehicle of claim 9 when depending on claim 4 or 5, wherein said slides (22c) are connected to the opposite ends of each primary chain (6) or to the opposite ends of the secondary chain (7) in such a way that, when the steering device (4) is actuated:
- all support assemblies (2B) disposed behind the first support assembly (2A) are simultaneously driven into an equiverse rotation by the primary chains (6), each of them by a different angle compared to the other support assemblies (2B) of the same row;
- the first support assembly (2A), connected to said secondary chain (7), is driven into a rotation with opposite direction compared to the one of the following support assemblies (2B).

11. The vehicle of one of the preceding claims, also comprising a structure formed of lateral uprights (30) and upper crosspieces (31); said structure acting as support for panels (32) used to close the structure.

12. The vehicle of claim 11, wherein said panels (32) are large pieces of waterproof material provided with transparent inserts (33) .

## Patentansprüche

1. Fahrzeug für den Transport von Passagieren, umfassend:
- ein Hauptfahrgestell (1) mit einer Längsachse (X);
- mehrere Sitze (23), umfassend einen Fahrersitz (23');
- mindestens zwei Längsreihen von Rädern (3), von denen jede Reihe mehr als zwei Räder (3) umfasst;
- mindestens zwei Längsreihen (F1, F2) von Halterungseinrichtungen (2) der Räder (3); wobei jede Halterungseinrichtung (2) ein Rad (3) trägt; wobei die Halterungseinrichtungen (2) um eine relativ zum Hauptfahrgestell (1) vertikale Achse drehbar montiert sind;
- eine Lenkvorrichtung (4), die gegenüber dem Fahrersitz (23') angeordnet ist;
- Antriebsmittel, um das Fahrzeug fortzubewegen;
- mindestens zwei Übertragungsmittel (M1, M2), die jeweils einer der beiden Reihen (F1, F2) von Halterungseinrichtungen zugeordnet sind, um die Lenkvorrichtung (4) mit jeder Halterungseinrichtung (2) zu verbinden; wobei die Übertragungsmittel (M1, M2) derart ausgebildet sind, dass die simultane Drehung der Halterungseinrichtungen (2) und der jeweiligen Räder (3) um einen unterschiedlichen Winkel entsprechend der Betätigung der Lenkvorrichtung (4) bewirkt wird;
**dadurch gekennzeichnet, dass**
die Antriebsmittel mindestens ein Paar von Pedalen (24) umfassen;
mindestens eine Halterungseinrichtung (2) mit dem mindestens einen Paar von Pedalen (24) und einem der Sitze (23) verbunden ist, derart, dass das mindestens ein Paar von Pedalen (24) und der Sitz (23) sich integral mit der mindestens einen Halterungseinrichtung (2) um eine relativ zum Hauptfahrgestell (1) vertikale Achse drehen.

2. Fahrzeug nach Anspruch 1, wobei die Halterungseinrichtungen (2) eine Fahrer-Halterungseinrichtung (2a) umfassen, der ein Fahrersitz (23') zugeordnet ist.

3. Fahrzeug nach Anspruch 1 oder 2, wobei mindestens eine Halterungseinrichtung (2) einen festen, nicht lenkbaren Lenker (25) umfasst, der integral mit der Halterungseinrichtung (2) ist.

4. Fahrzeug nach einem der vorstehenden Ansprüche, wobei die Übertragungsmittel (M1, M2) Folgendes umfassen:
- zwei Trägerwellen, die jeweils von der Lenkvorrichtung (4) betätigt werden und mit den Halterungseinrichtungen (2) der gleichen Reihe (F1, F2) verbunden sind;
- einen ersten Ritzelsatz (5) zur Betätigung der Halterungseinrichtungen (2) der ersten Reihe (F1) und einen zweiten Ritzelsatz (5a) zur Betätigung der Halterungseinrichtungen (2) der zweiten Reihe (F2); wobei die Ritzel (5, 5a) eines jeden Satzes koaxial auf derselben Trägerwelle montiert sind;
- eine Mehrzahl von Primärketten (6), die jeweils mit einer der Halterungseinrichtungen (2B) verbunden sind, die hinter einer ersten Halterungseinrichtung (2A) angeordnet ist; wobei jede Primärkette (6) eines der Ritzel (5, 5a) des ersten Satzes oder des zweiten Satzes in Eingriff nimmt, derart, dass bei Betätigung der Lenkvorrichtung (4) jede Primärkette (6) die dazu gehörige Halterungseinrichtung (2B) um einen Winkel in Drehung versetzt, der gleichgerichtet ist, aber eine relativ zu den anderen Halterungseinrichtungen (2B) der gleichen Reihe unterschiedliche Amplitude aufweist;
- zwei Sekundärketten (7), jeweils eine pro Reihe; wobei jede Sekundärkette (7) eines der Ritzel (5, 5a) in Eingriff nimmt und mit der ersten Halterungseinrichtung (2A) einer jeden Reihe verbunden ist; wobei die Sekundärkette (7) das jeweilige Ritzel (5, 5a) derart in Eingriff nimmt, dass die erste Halterungseinrichtung (2A) einer jeden Reihe sich in Gegenrichtung relativ zu den Halterungseinrichtungen (2B) der gleichen Reihe dreht, die hinter der ersten Halterungseinrichtung (2A) angeordnet sind.

5. Fahrzeug nach Anspruch 4, wobei die Kopplung zwischen den Ritzeln eines jeden Ritzelsatzes (5, 5a) und den Halterungseinrichtungen (2B) einer jeden Reihe, die hinter der ersten Halterungseinrichtung (2A) angeordnet sind, derart erfolgt, dass der Drehwinkel der Halterungseinrichtungen (2B), die hinter der ersten Halterungseinrichtung (2A) angeordnet sind, zum hinteren Ende des Fahrzeugs hin größer wird.

6. Fahrzeug nach einem der vorstehenden Ansprüche, wobei die Lenkvorrichtung (4) ein Lenkrad (4a) mit einer Lenksäule (4b) umfasst.

7. Fahrzeug nach Anspruch 6, wenn abhängig von Anspruch 4 oder 5, wobei der Ritzelsatz (5) der ersten Reihe an der Basis der Lenksäule (4b) angebracht ist; wobei die Übertragungsmittel (M1, M2) eine Umlenkkette (9) umfassen, die ein Ritzel des ersten Ritzelsatzes (5) und ein Ritzel des zweiten Ritzelsatzes (5a) in Eingriff nimmt, derart, dass die Bewegung vom ersten Ritzelsatz (5) auf den zweiten Ritzelsatz (5a) übertragen wird.

8. Fahrzeug nach einem der vorstehenden Ansprüche, wobei das Hauptfahrgestell (1) ein horizontales Widerlager (11) für jede Halterungseinrichtung (2) umfasst; wobei jede Halterungseinrichtung (2) Trägermittel (22) umfasst, die sie gleitbeweglich in Bezug auf das Widerlager (11) tragen, das auf dem Hauptfahrgestell (1) befestigt ist.

9. Fahrzeug nach Anspruch 8, wobei die Trägermittel (22) eine Gabel (22a) zum Tragen des Rades (3) und mindestens ein Paar von gespreizten Beinen (22b) umfassen, die an der Basis jeweils in Schiebern (22c) enden, die gleitbeweglich an dem horizontalen Widerlager (11) befestigt sind.

10. Fahrzeug nach Anspruch 9, wenn abhängig von Anspruch 4 oder 5, wobei die Schieber (22c) an den entgegengesetzten Enden einer jeden Primärkette (6) oder an den entgegengesetzten Enden der Sekundärkette (7) verbunden werden, derart, dass bei Betätigung der Lenkvorrichtung (4):
- alle Halterungseinrichtungen (2B), die hinter der ersten Halterungseinrichtung (2A) angeordnet sind, gleichzeitig von den jeweiligen Primärketten (6) in eine gleichgerichtete Drehung versetzt werden, jeweils um einen im Vergleich zu den anderen Halterungseinrichtungen (2B) derselben Reihe verschiedenen Winkel;
- die erste Halterungseinrichtung (2A), die mit der Sekundärkette (7) verbunden ist, in eine im Vergleich zu den auf sie folgenden Halterungseinrichtungen (2B) entgegengesetzte Drehung versetzt wird.

11. Fahrzeug nach einem der vorstehenden Ansprüche, umfassend ferner eine Struktur, die aus seitlichen Pfosten (30) und oberen Querträgern (31) gebildet ist; wobei die Struktur Platten (32) zum Verschließen der Struktur trägt.

12. Fahrzeug nach Anspruch 11, wobei die Platten (32) große, wasserundurchlässige Planen sind, die mit transparenten Einsätzen (33) versehen sind.

## Revendications

1. Véhicule pour le transport de passagers, comprenant :
- un châssis principal (1) ayant un axe longitudinal (X) ;
- plusieurs sièges (23) qui comprennent un siège-conducteur (23') ;
- au moins deux rangées longitudinales de roues (3) où chaque rangée comprend plus de deux roues (3) ;
- au moins deux rangées (F1, F2) longitudinales de groupes de support (2) des roues (3) ; chaque groupe de support (2) soutenant une roue (3) ; lesdits groupes de support (2) étant montés pivotants autour d'un axe vertical par rapport au dit châssis principal (1) ;
- un dispositif de direction (4) disposé devant ledit siège-conducteur (23') ;
- des moyens de propulsion pour permettre le déplacement du véhicule ;
- au moins deux moyens de transmission (M1, M2) chacun associé à l'une des deux rangées (F1, F2) des groupes de support pour relier ledit dispositif de direction (4) à chaque groupe de support (2) ; lesdits moyens de transmission (M1, M2) étant configurés de façon à causer la rotation simultanée des dits groupes de support (2) et des roues correspondantes (3) d'un angle différent suite à l'actionnement du dispositif de direction (4) ;
**caractérisé en ce que**
lesdits moyens de propulsion comprennent au moins une paire de pédales (24) ;
au moins un groupe de support (2) est associé à ladite au moins une paire de pédales (24) et à l'un desdits sièges (23), de façon à ce qu'au moins une paire de pédales (24) et ledit siège (23) tournent solidairement au dit au moins un groupe de support (2) autour d'un axe vertical par rapport au châssis principal (1).

2. Véhicule selon la revendication 1, où lesdits groupes de support (2) comprennent un groupe de support-conducteur (2a) auquel est associé ledit siège-conducteur (23').

3. Véhicule selon la revendication 1 ou 2, où ledit au moins un groupe de support (2) comprend un volant fixe (25) non-directeur solidaire au groupe de support (2).

4. Véhicule selon l'une quelconque des revendications précédentes, où les moyens de transmission (M1, M2) comprennent :
- deux arbres de support, chacun actionné par le dispositif de direction (4) et relié aux groupes de support (2) d'une même rangée (F1, F2) ;
- un premier jeu de pignons (5) pour l'actionnement des groupes de support (2) de la première rangée (F1) et un second jeu de pignons (5a) pour l'actionnement des groupes de support (2) de la seconde rangée (F2) ; lesdits pignons (5, 5a) de chaque jeu étant montés coaxiaux sur un même arbre de support ;
- une pluralité de chaines primaires (6), chacune reliée à l'un des groupes de support (2B) disposé derrière à un groupe de support chef de file (2A) ; chaque chaine primaire (6) s'engrenant avec l'un des pignons (5, 5a) du premier ou du second jeu de sorte que, en actionnant le dispositif de direction (4), chaque chaine primaire (6) entraîne en rotation le groupe de support (2B) correspondant d'un angle avec la même direction, mais de ampleur différente par rapport à celui des autres groupes de support (2B) de la même rangée ;
- deux chaines secondaires (7), une pour chaque rangée ; chaque chaine secondaire (7) s'engrenant avec l'un desdits pignons (5, 5a) et étant reliée au groupe de support chef de file (2A) de chaque rangée ; ladite chaine secondaire (7) s'engrenant avec le pignon (5, 5a) correspondant, de sorte que le groupe de support chef de file (2A) de chaque rangée tourne dans la direction opposée à celle des groupes de support (2B) de la même rangée, disposés derrière le groupe de support chef de file (2A).

5. Véhicule selon la revendication 4, où l'accouplement entre les pignons de chaque jeu de pignons (5, 5a) et les groupes de support (2B) de chaque rangée, disposés derrière le groupe de support chef de file (2A), s'effectue de manière telle que l'angle de rotation des groupes de support (2B), disposés derrière le groupe de support chef de file (2A), augmente en allant vers l'arrière du véhicule.

6. Véhicule selon l'une quelconque des revendications précédentes, où ledit dispositif de direction (4) comprend un volant (4a) ayant une colonne de direction (4b).

7. Véhicule selon la revendication 6 quand dépendante de la revendication 4 ou 5, où ledit jeu de pignons (5) de la première rangée est appliqué à la base de ladite colonne de direction (4b) ; lesdits moyens de transmission (M1, M2) comprenant une chaine de renvoi (9) qui s'engrène avec un pignon du premier jeu de pignons (5) et avec un pignon du second jeu de pignons (5a), de manière à transmettre le mouvement du premier jeu de pignons (5) au second jeu de pignons (5a).

8. Véhicule selon l'une quelconque des revendications précédentes, où ledit châssis principal (1) comprend un bloc de poussée horizontal (11) pour chaque groupe de support (2) ; chaque groupe de support (2) comprenant des moyens de support (22) qui le soutiennent de manière coulissante par rapport au dit bloc de poussée (11) fixé sur le châssis principal (1).

9. Véhicule selon la revendication 8, où lesdits moyens de support (22) comprennent une fourche (22a) pour soutenir la roue (3) et au moins une paire écartée de jambes (22b) qui se terminent à la base avec des patins (22c) correspondants accrochés de manière coulissante au dit bloc de poussée horizontal (11).

10. Véhicule selon la revendication 9 quand dépendante de la revendication 4 ou 5, où lesdits patins (22c) sont reliés aux extrémités opposées de chaque chaine primaire (6) ou aux extrémités opposées de la chaine secondaire (7) de manière que, lors de l'actionnement du dispositif de direction (4) :
- tous les groupes de support (2B) disposés derrière le groupe de support chef de file (2A) soient entraînés simultanément dans une rotation allant dans la même direction par les chaines primaires (6), correspondantes, chacun d'un angle différent des autres groupes de support (2B) de la même rangée ;
- le groupe de support chef de file (2A), relié à ladite chaine secondaire (7) soit entraîné dans une rotation de direction opposée à celle des groupes de support (2B) qui le suivent.

11. Véhicule selon l'une quelconque des revendications précédentes, comprenant également une structure formée par des montants latéraux (30) et des traverses de sommet (31) ; ladite structure soutenant des panneaux (32) de fermeture de la structure.

12. Véhicule selon la revendication 11, où lesdits panneaux (32) sont des bâches imperméables qui incorporent des inserts transparents (33).
